# EUROPEAN PATENT APPLICATION

(11) **EP 2 581 405 A1**
(43) Date of publication of application: **17.04.2013**
(21) Application number: 11184900.6
(22) Date of filing: 12.10.2011
(51) Int. Cl.: C08K 3/04, C08J 3/215

(54) **Copolymer nanocomposite**

(71) Applicant: Vrije Universiteit Brussel, 1050 Brussel (BE)
(72) Inventor: Hill, Gavin, 3090 Jezus-Eik (BE)
(74) Representative: Pronovem

(57) **Abstract**

The present invention is related to a nanocomposite comprising carbon nanoparticles and a heterophasic block copolymer, said block copolymer comprising at least one segment of a polymer A and at least one segment of polymer B, forming a continuous polymer A phase and a polymer B phase, said nanocomposite being characterised in that the polymer A phase has a higher affinity for carbon nanoparticles than the polymer phase B, so that carbon nanoparticles concentration is higher in polymer A phase than in polymer B phase, the percolation threshold of carbon nanoparticles being reached in polymer A phase.

## Description

### Field of the Invention

The present invention is related to copolymer nanocomposites comprising carbon nanoparticles, and the production process of such nanocomposites.

### Technical Background

Carbon Nanotubes (CNT's) can be dispersed into a variety of polymer materials either by melt mixing or mixing in solution. At high CNT loadings many materials will show statistical electrical conductivity by saturation of nanotubes into the polymer matrix. At lower CNT loadings conductivity is only achieved by the formation of a Percolated Nanotube network, where CNT's are dispersed such that the tubes are adequately exfoliated (debundled) and form a conductive pathway.

The minimum amount of CNT's required for conductivity is the Percolation Threshold and it is controlled by the degree of exfoliation as well as the CNT compatibility with the material and to some degree the physical properties of the material. Homopolymers, copolymers and polymer blends have all shown degrees of percolation, though complete exfoliation of the CNT's may be difficult to prove. Copolymers and polymer blends consisting of a minor CNT-compatible phase and a matrix consisting of a CNT-incompatible material have been shown to reduce the percolation threshold for CNT's. As the minor phase should also percolate through the material, the concept is known as Double Percolation.

When Double Percolation is achieved, it leads to an overall reduction in the amount of CNT's required for achieving electrical (semi-)conductivity. Percolation threshold is defined as the concentration at which the conductivity reaches about 10⁻⁵ to 10⁻⁴ S/m.

A Latex Approach described by M-C. Hermant et al. in "Manipulating the Percolation Threshold of Carbon Nanotubes in Polymeric Composites", 2009, Technische Universiteit Eindhoven, showed that the percolation threshold of materials can be improved (reduced) by exfoliation of CNT's using an aqueous surfactant, sodium dodecyl sulfate (SDS) and dispersing the CNT's into homopolymer or copolymer latex solutions.

Emulsion polymerization is a common technique used in combination with Controlled Radical Polymerization to produce polymers and block copolymers of controlled size, narrow polydispersity and with good conversion at improved reaction rates.

Emulsion polymerization usually consists of an aqueous phase containing a suitable emulsifier (1-5 wt%) and an organic phase consisting of monomer(s), stabilizer and catalyst/initiator. The stabilizer is an ultra-hydrophobic molecule that forms the core of the emulsion prior to the onset of polymerization, the amount of stabilizer will have an effect on emulsion stability and particle size of the latexes. In most reactions around 0.5-1 wt% of stabilizer is added. For PMMA in a typical emulsion polymerization process, the conversion reaches 85% in around 2 hours.

Many CNT compatible blocks are known such as polystyrene (PS), polymethylmethacrylate (PMMA), polybutylacrylate (PBA), polybutadiene, poly(ε-caprolactone) and polysiloxanes (PDMS). The pre-requisite generally for compatibility is low polarity and in some cases the availability of π-electrons. Consequently polymer materials containing polar functional groups tend to be incompatible phases for CNT's.

### Aims of the Invention

The present invention aims to provide a CNT nanocomposite with reduced percolation threshold and a process to produce such nanocomposites.

### Summary of the Invention

The present invention is related to a nanocomposite comprising carbon nanoparticles and a heterophasic block copolymer, said block copolymer comprising at least one segment of a polymer A and at least one segment of polymer B, forming a continuous polymer A phase and a polymer B phase, said nanocomposite being characterised in that the polymer A phase has a higher affinity for carbon nanotubes than the polymer phase B, so that carbon nanotubes concentration is higher in polymer A phase than in polymer B phase, the percolation threshold of carbon nanotubes being reached in polymer A phase.

According to particular preferred embodiment, the present invention comprises one or suitable combination of at least two of the following features:
- the carbon nanoparticles are carbon nanotubes;
- the polymer A is a siloxane based polymer, more preferably PDMS;
- the polymer B comprises segments of polymer selected from the group consisting of PMMA (polymethyl methacrylate), PMA (polymethacrylic acid), PDMAEMA (poly(dimethyaminoethyl methacrylate)), PNIPAM (poly(N-isopropylacrylamide)), PMAM (polymethacrylamide) and PNaSS (poly sodium styrene sulfonate);
- the continuous phase of polymer A is the minor phase;
- the block copolymer is a diblock (AB), or a triblock of structure BAB, or has a B type backbone with A type grafted side chains;
- the ratio between the molecular weight of A segment on the B segment(s) is preferably less than 0.2, advantageously about 0.1;
- the A segments have a molecular weight of about 10 kDa, and the B segments have a molecular weight of about 100 kDa;
- the carbon nanotubes concentration in wt% of the total nanocomposite is less than 0.5% wt, preferably less than 0.25 wt%, more preferably between 0.2 wt% and 0.1 wt%;
- the block copolymer used in the invention is preferably produced by emulsion polymerisation.

The present invention is also related to an aqueous dispersion of the nanocomposite according to the invention.

Another aspect of the invention is related to a process for the production of an aqueous nanocomposite dispersion according to the invention comprising the steps of:
- providing an emulsion comprising water, a surfactant, a segment of polymer A or B or a segment of a precursor of polymer A or B;
- add a second monomer of polymer B or A, or a monomer of a polymer precursor of polymer B or A to produce a copolymer latex;
- add an exfoliated suspension of carbon nanotubes in the copolymer latex to obtain the nanocomposite dispersion.

Preferably, the step of providing an emulsion comprising water, a surfactant, a segment of polymer A or B or a segment of a precursor of polymer A or B further comprises the steps of:
- providing an emulsion/dispersion comprising water, a surfactant, a first monomer of polymer A or B, or a monomer of a polymer precursor of polymer A or B, and a polymerisation catalyst;
- let the polymerisation of the first polymer or polymer precursor occur up to a conversion of about 80% to produce an homopolymer latex.

Advantageously, said segment of polymer A or B or said segment of precursor of polymer A or B have RAFT initiator end groups.

Preferably, the surfactant is SDS (sodium dodecyl sulphate).

The present invention is also related to a process for the production of a dried nanocomposite according to the invention using the process for the production of an aqueous nanocomposite dispersion according to the invention further comprising the step of drying the nanocomposite dispersion.

Preferably, in the process for the production of a dried nanocomposite according to the invention, a precursor of polymer B having high affinity towards carbon nanotubes is used (i.e., apolar) and wherein said precursor is selectively modified to obtain a polar polymer B.

Advantageously, the selective modification is obtained by thermolysis of a labile group.

Preferably, an additional thermal treatment is used in order to let the carbon nanotubes reorganise.

Advantageously, the thermal treatment is performed in the presence of a polar plasticizer, preferably water vapour, in order to plasticise the polar phase.

### Brief Description of the Drawings

Fig. 1 represents a percolated Network of CNT's inside the Minor Polymer Phase of a phase-separated polymer blend or block copolymer.

Fig. 2 schematically represents an emulsion polymerization process (from D. Braun et al. in Polymer Synthesis Theory and Practice, 4^{th} Ed.).

Fig. 3 represents conversion plot for PMMA in an emulsion polymerization.

Fig. 4 represents percolation plot for CNT compatible/compatible block copolymers.

Fig. 5 represents TGA of PtBMA showing the cleavage of t-butyl side groups

Fig. 6 represents percolation plot of PMMA-b-PtBMA (PMA) before and after plasticizing, grey zone indicates where Percolation threshold is observed in homopolymer material.

Fig. 7 represents percolation plot for PMMA-b-PDMAEMA, grey area indicates Percolation threshold for homopolymers.

Fig. 8 represents the conversion of PDMS-b-PMMA over time.

Fig. 9 represents scheme showing method of preparing PDMS-RAFT initiators.

Fig. 10a represents percolation plot comparing two Compatible/Compatible blocks, with a Compatible/Incompatible Block related to the examples of table 1.

Fig. 10b represents the Percolation plot for PDMS-b-PtBMA films pressed at 180 °C and the conductivity of the film after plasticizing.

Fig. 11 represents conversion plot for example 7 and 8 of table 2.

Fig. 12 represents TGA of PDMS-b-PDMAEMA block copolymers from dispersions.

Fig. 13 represents schematic of hydrolysis/thermolysis of PDMAEMA blocks.

Fig. 14 represents DSC traces for PDMS (blue), PDMAEMA (green) and PDMAEMA after drying (red).

Fig. 15 represents DSC traces for PDMS-b-PDMAEMA block copolymers 8 (green) and 9 (blue) with (dashed) and without CNT's (solid).

Fig. 16 represents percolation plot for PDMS-PDMAEMA coatings.

Fig. 17 represents height and phase trace of PDMS-PDMAEMA from example 7.

Fig. 18 represents height, phase and conductive AFM

Fig. 19 represents AFM measurements for PDMS-b-PDMAEMA (10,000-40,000) of example 8 without CNT's.

Fig. 20 represents AFM measurement of PDMS-b-PDMAEMA 8 with 0.5 wt% CNT's.

Fig. 21 represents exfoliation of 0.1 wt% MWCNT's into PDMS-b-PDMAEMA of example 8.

Fig. 22 represents UV-vis absorbances for the dispersing of MWCNT's using PDMS-b-PDMAEMA block copolymers of example 8 and 9 compared with SDS at 30 mins ultrasound mixing.

Fig. 23 represents exfoliation of 0.1 wt% CNT's into PDMS-b-PNaSS of example 12.

Fig. 24 represents dynamic light scattering measurement for PDMS-b-PDMAEMA 9 with and without CNT's.

Fig. 25 represents resistivity for 0.3 wt% CNT's directly dispersed (i.e. before the drying step) into PDMS-b-PDMAEMA of example 8.

Fig. 26 represents AFM and conductive AFM for drop-cast direct dispersions on glass (two areas).

Fig. 27 represents exfoliation plots for PDMS-b-PNIPAM. The higher values for 0.75 wt% is attributed to large absorbance maxima < 257.4 nm (absorption maxima for MWCNT's).

Fig. 28 represents conductivity vs. sonication energy of 0.5 wt% MWCNT's directly dispersed into PDMS-b-PNIPAM. Dropcast dispersions had approximate thickness of 60 µm.

Fig. 29 represents the DSC results for sample 14 with 0.5 wt% CNT's and without CNT's.

Fig. 30 represents modulated temperature DSC results for 10 wt% of sample 14 in water, with and without CNT's, the measurement was taken during cooling.

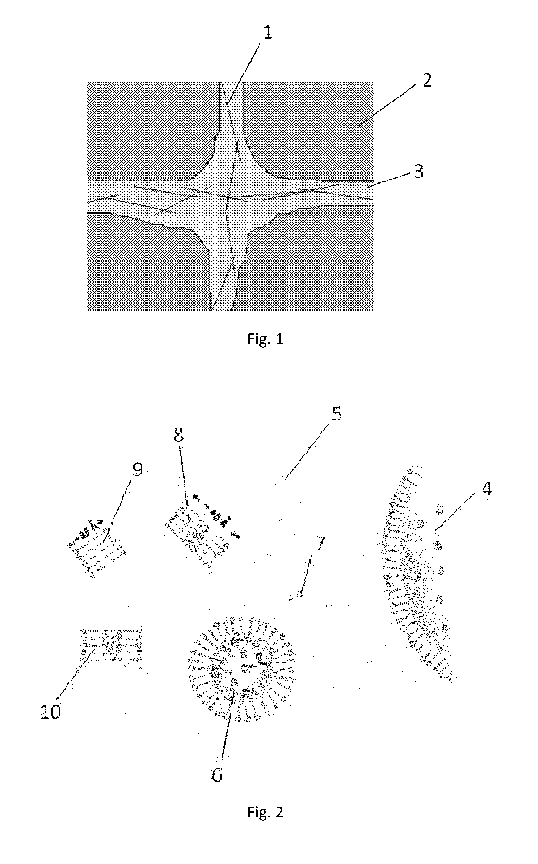

### Figure keys (Figures 1 and 2)

1 Carbon Nanotubes
2 Major phase
3 Minor phase containing carbon nanotubes
4 Monomer droplets (~1µm)
5 water
6 latex particles containing monomer and polymer (~10nm)
7 soap (surfactant) molecule
8 soap micelle swollen with monomer
9 empty soap micelle
10 soap micelle containing a growing polymer chain

### Detailed Description of the Invention

The present invention is related to a nanocomposite comprising carbon nanoparticles such as carbon nanotubes and a heterophasic block copolymer, said block copolymer comprising at least one segment of a polymer A and at least one segment of polymer B, forming a continuous polymer A phase and a polymer B phase, said nanocomposite being characterised in that the polymer A phase has a higher affinity for carbon nanotubes than the polymer B phase, so that carbon nanotubes concentration is higher in polymer A phase than in polymer B phase, the percolation threshold of carbon nanotubes being reached in polymer A phase.

Preferably, the polymer phase A is an apolar polymer, such as a polyolefin or PDMS and the polymer phase B is a polar polymer, such as polyacids, polyelectrolyte, etc. Preferably, the polyolefin comprises aromatic rings and/or conjugated double bonds (such as polystyrene).

In some particular cases, both phases may be considered as apolar (i.e. compatible with carbon nanoparticles) but one of the phases being more compatible. This is for example the case for PMMA/PDMS block copolymers, carbon nanoparticles being highly compatible with PDMS, more than with PMMA.

As an alternative to carbon nanotubes, this invention may easily be adapted to other allotropic forms of carbon nanoparticles, such as graphenes.

Preferably, the polymer A is a siloxane based polymer, more preferably PDMS.

Advantageously, the polymer B comprises segments of polymer selected from the group consisting of acrylate polymer, acrylic acid polymer, ionomer and polyelectrolyte. More preferably, the polymer B comprises segments of polymer selected from the group consisting of PMMA (polymethyl methacrylate), PMA (polymethacrylic acid), PDMAEMA (poly(dimethyaminoethyl methacrylate)), PNIPAM (poly(N-isopropylacrylamide)), PMAM (polymethacrylamide) and PNaSS (poly sodium styrene sulfonate).

Preferably, the continuous phase of polymer A is the minor phase (i.e. represents less than 50% in volume) in order to decrease the percolation threshold of the carbon nanotubes concentrated in the continuous phase.

Preferably, the block copolymer is a diblock (AB) or a triblock of structure BAB or has a B type backbone with A type grafted side chains.
In diblock or triblock copolymers, the ratio between the molecular weight of A segment on the B segment(s) is preferably less than 0.2, advantageously about 0.1.

Preferably, the A segments have a molecular weight of about 10 kDa, and the B segments have a molecular weight of about 100 kDa.

The molecular weight ratio between the different segments and the molecular weight of the segments are the parameters used to control microstructure of the final nanocomposite.

Advantageously, the percolation threshold of the carbon nanotubes is less than 0.5% weight concentration in of the total dried nanocomposite, preferably less than 0.25%, more preferably between 0.2 and 0.1.

In order to better control the microstructure, the block copolymer used in the invention is preferably produced by emulsion polymerisation.

Another aspect of the invention is related to a process for the production of an aqueous nanocomposite dispersion according to the invention comprising the steps of:
- providing an emulsion/dispersion comprising water, a surfactant, a first monomer of polymer A or B, or a monomer of a polymer precursor of polymer A or B, and a polymerisation catalyst;
- let the polymerisation of the first polymer occur up to a conversion of about 80% to produce an homopolymer latex;
- add a second monomer of polymer B or A, or a monomer of a polymer precursor of polymer B or A to produce a copolymer latex;
- add an exfoliated suspension of carbon nanotubes in the copolymer latex to obtain the nanocomposite dispersion.

The aqueous nanocomposite dispersion may then be used directly as a conductive ink, or the water may be evaporated to obtain a dried nanocomposite according to the invention.

Another aspect of the invention is related to a process for the production of a nanocomposite according to the invention comprising the steps of:
- providing an emulsion comprising water, a surfactant, a segment of polymer A or B having RAFT initiator end groups or a segment of a polymer precursor of polymer A or B having RAFT initiator end groups, and a polymerisation catalyst, producing an homopolymer latex;
- add a second monomer of polymer B or A, or a monomer of a polymer precursor of polymer B or A to produce a copolymer latex;
- add an exfoliated suspension of carbon nanotubes in the copolymer latex ;
- evaporate water to obtained the dried nanocomposite.

In order to simplify the emulsion reaction and to avoid formation of a hydrogel, the emulsion process preferably produces block copolymers wherein both blocks are apolar polymers having about the same affinity towards carbon nanotubes. In that case, the process for the production of the nanocomposite of the invention comprises an additional step for modifying selectively one of the blocks (block B) into a polar polymer segment. Such additional step may be for example thermolysis of a labile group, such as the thermolysis of PtBMA (poly(t-butyl methacrylate)) above about 140°C leading to the conversion of that segment into PMA (poly(methacrylic acid)). Other treatments may be used, such as the conversion of acetate pending group into hydroxyl group by saponification (conversion of EVA (ethylene-vinyl acetate) or PVA (poly vinyl acetate) into EVOH (ethylene vinyl alcohol) or PVOH (poly(vinyl alcohol)) for example), or oxidation treatment, induced by radiation or chemically,...

When said additional step is used, it may be useful to add a thermal treatment in order to let the carbon nanotubes reorganise into a structure closer to the thermodynamic equilibrium.

In the described production process, SDS is used for convenience, due to its ability to exfoliate carbon nanotubes.

In some cases the use of SDS can be avoided, as the block copolymer can act as a surfactant. SDS can adversely affect the final properties (stability, conductivity,...).

To achieve double percolation in CNT-based nanocomposites using block copolymers, the latter should have at least one CNT-compatible and one CNT-incompatible block (or less CNT-compatible). The CNT-incompatible block should consist of (more) polar monomer repeat units. However, polar monomers rarely form stable latexes and if they contain both hydrogen bond donor and acceptor groups, such as primary amines or alcohols, they tend to form physical hydrogels upon polymerization in aqueous media. This complicates the application of the latex approach for these materials.

The present invention provides two alternatives for solving this issue:
- the in situ transformation of a compatible/compatible block copolymer to a compatible/incompatible block copolymer by selectively changing apolar functionalities of a given block to polar functionalities,
- the aqueous dispersion polymerization of compatible/incompatible block copolymers having at least one type of polar monomer as an alternative to emulsion polymerization.

The disclosed invention also has other important advantages:
- the use of water as a processing aid and/or reaction medium, replacing organic solvents and/or organic plasticizers,
- the reduction of the number of processing steps.

Examples of block copolymers using different constituents having percolation thresholds as low as 0.1-0.2 wt% for multi-walled CNTs (MWCNT) are disclosed in the present invention.

### Preparation of Copolymer by RAFT emulsion polymerization.

Initial studies looked at the synthesis of homopolymers and copolymers of PS, PMMA, poly(t-butyl methacrylate; PtBMA) and poly(dimethylaminoethyl methacrylate; PDMAEMA) by Reverse Addition Fragment Transfer (RAFT) in aqueous emulsion systems. The block copolymers are formed by first reacting the major - or more reactive monomer then adding the second monomer when conversion reaches >80%, as determined by gravimetry. The resulting latexes were then processed according to the latex approach into the nano-composite materials by mixing CNT's exfoliated in water using SDS as a surfactant, freeze drying and compression molding at 180 °C.

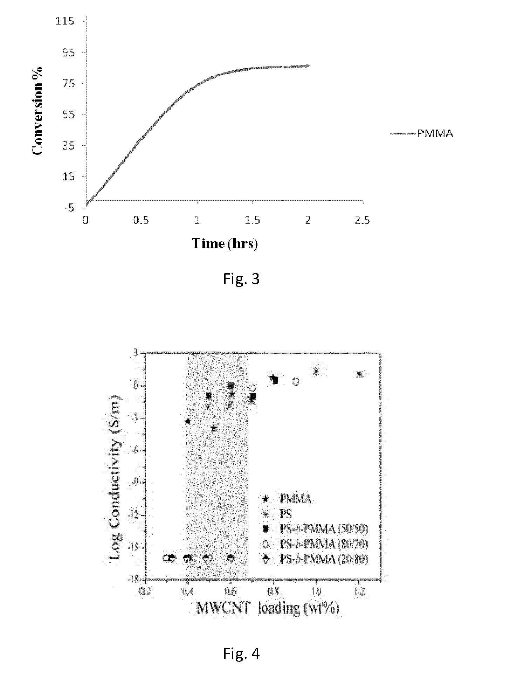

In order to have comparative examples using compatible blocks only, homopolymers and compatible/compatible block copolymers of PMMA and PS were synthesized and the conductivity C of their nanocomposites was measured. The results are represented in Figure 4. The plot displays log C values to clarify the trend. The area in grey illustrates the area for percolation threshold of these materials. The conductivity of polymeric films are recorded using 2 or 4 point conductivity measurements. Graphite or Silver Colloidal contacts are painted on the film 1 cm in length and 1 cm apart to give sheet dimensions of 1 cm².

From Figure 4 it is clear that Double Percolation does not hold for CNT compatible/compatible materials, as there was no improvement when either PS or PMMA was the major phase, and the 50:50 yielded similar results to the homopolymers.

By modifying one block in a compatible/compatible block copolymer to an incompatible block, creating a compatible/incompatible block copolymer it is possible to reduce the percolation threshold.

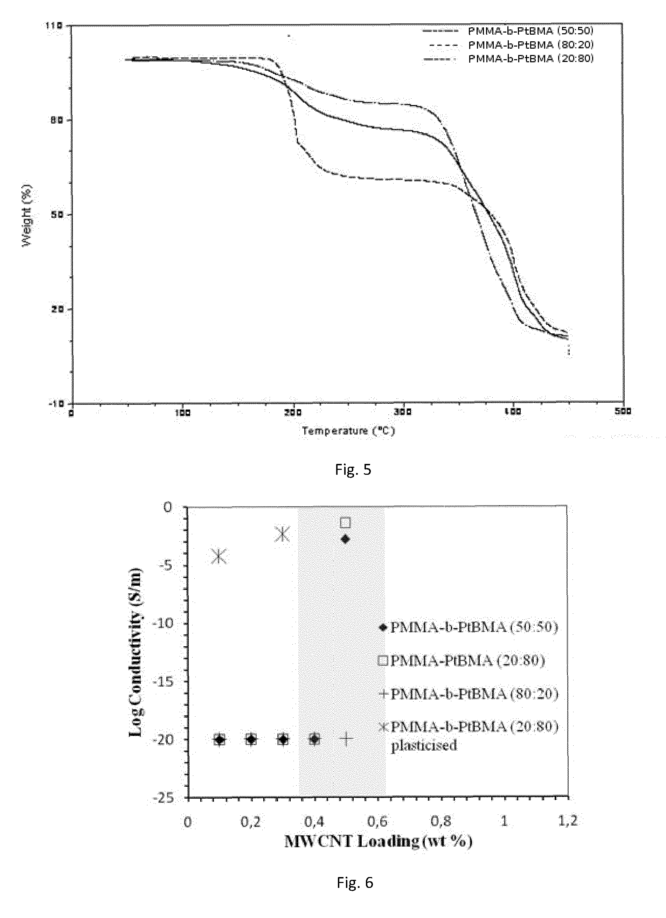

PMMA-b-PtBMA and PS-b-PtBMA, being compatible/compatible block copolymers, were transformed into compatible/incompatible block copolymers. The P*t*BMA block is originally compatible, but P*t*BMA undergoes thermolysis at T > 140°C (Figure 3) to form poly(methacrylic acid; PMA). The change in polarity results in a change from a CNT compatible to a CNT incompatible block. Figure 5 shows TGA results that show thermolysis of t-butyl side groups.

This change in composition of the material also leads to a drastic change in the physical properties of the polymer, as PMA has a glass transition temperature Tg higher than 200 °C, resulting in immobilization of the CNTs within the less compatible phase. As seen in figure 6, this results in a very low conductivity (or even no conductivity) of the materials. If however, the samples are subjected to steam for 6 hours and then re-compression molded at 100-110 °C at 0.5 T pressure, conductivity is induced in the previously non-conductive samples. (Semi-) conductivity is reached at MWCNT loadings as low as 0.1 wt%, indicating double percolation (figure 6).

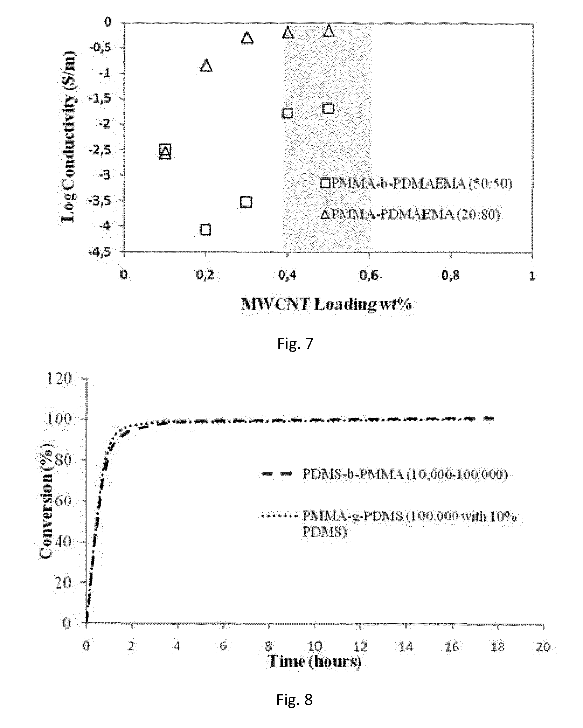

PMMA-b-PDMAEMA and PS-b-PDMAEMA block copolymers are difficult to dry and are hygroscopic, as a result the polymers retained a great deal of moisture after freeze drying. These materials were film pressed at temperatures around 90-100 °C. These nanocomposite films also showed double percolation behavior at loadings of 0.1-0.2 wt% (figure 7).

The lower percolation threshold of the polymer composites where the incompatible PDMAEMA block was the major block (the 20:80, as opposed to the 50:50), indicates Double Percolation is achieved in the minor phase, further reducing the percolation threshold.

### Preparation of Copolymer Systems Prepared by RAFT emulsion/dispersion polymerization using a macromolecular PDMS-RAFT agent.

Polydimethylsiloxane (PDMS) is a polymeric organosilicon used in a variety of applications for its viscoelastic and flow properties, its thermal stability and relatively low toxicity.

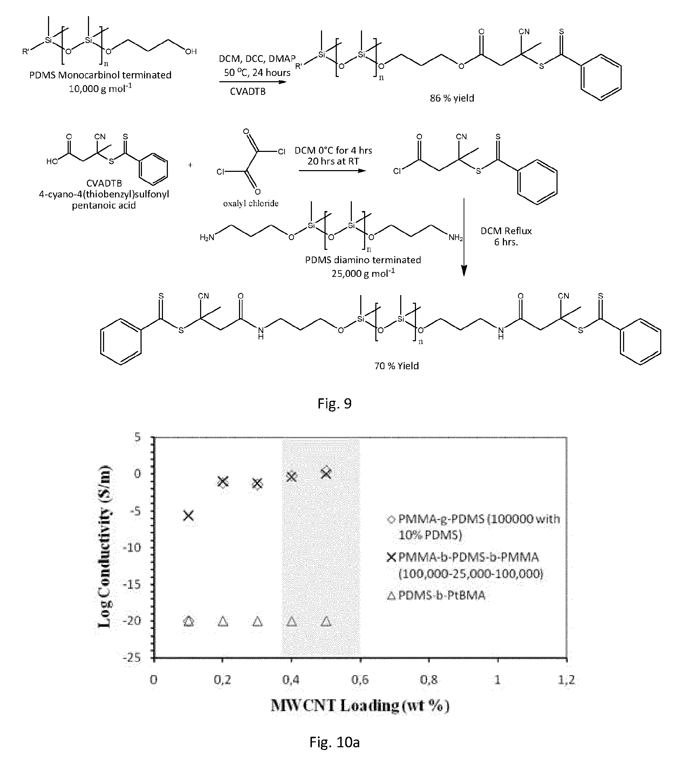

To synthesize PDMS containing block copolymers by RAFT polymerization in emulsion or dispersion required the synthesis of a PDMS containing RAFT initiator as described by J.T. Lai *et al*. in Macromolecules, 2002, 35, 6754. RAFT is a living polymerization technique where the initiating species donates the propagating radical that attacks the monomer, and chain growth occurs by reinitiation of reactive chain ends. To produce PDMS-RAFT agents, a PDMS-mono-carbinol or a PDMS-di-amine were reacted by esterification or amidation to form the macro-initiator. The initiator was purified by column chromatography, washed with methanol and dried overnight under vacuum. This scheme is represented in figure 9

PDMS-RAFT agents were used to prepare block copolymers containing: PMMA, PS, P*t*BMA, PDMAEMA, PNaSS [poly(sodium styrene sulfonate)] and PNIPAM [poly(N-isopropyl acrylamide)].

The polymers are prepared using the same emulsion technique as before, with the important exception that no stabilizer needs to be added, as the PDMS-RAFT agents are ultra-hydrophobic molecules that act as both stabilizer and initiator. This is the first application of this stabilizer free method for making block copolymers.

Typical reaction conditions are given below:
- 40 g water
- 2 wt% sodium dodecyl sulfate (SDS)
- 5-10 g monomer of the B block
- N PDMS-RAFT
- N/2 azobisisobutyronitrile (AIBN)
- Total wt% solids did not exceed 25%.
Reactions were carried out between 75°C and 85°C. Conversions were monitored by gravimetry.

Examples of PDMS co-polymers synthesized by emulsion polymerization are presented in table 1. The difference between average diameter and average radius is inherent to the DLS method and is due to the fact that the particles are not spherical but more elliptical. Perfectly spherical particles would induce measured radius being half of the diameter.

**Table 1**

| | **A-block = PDMS B-block** | **Block lengths in A-B and B-A-B block copolymers ¹ in Daltons** | **Solids content (%)** | **Particle size by DLS** | | |
|---|---|---|---|---|---|---|
| | | | | Diam. [nm] | Radius [nm] | PD² |
| 1 | PMMA | 10,000-*100, 000* | 24 | 48.6 | 17.0 | 0.123 |
| 2 | PS | *100,000*-25,000-*100,000* | 20 | 60.1 | 16.7 | 0.078 |
| 3 | PtBMA | 10,000-*100, 000* | 15 | 51.2 | 17.2 | 0.122 |
| 4 | PMMA | *100,000*-25,000-*100,000* | 13 | 154.1 | 83.1 | 0.291 |
| 5 | P*t*BMA | *50,000*-25,000-*50,000* | 18 | - | - | - |
| 6 | PMMA-g-PDMS³ | *100,000* with 10 % grafts | 24 | 96.7 | 32.4 | 0.113 |

| | | | | | | |
|---|---|---|---|---|---|---|
| ¹Approx B block lengths are shown in italics, ² PD is the polydispersity, ³ PMMA-g-PDMS graft copolymer of 100,000 g/mol with 10% PDMS grafts, this was synthesized in emulsion by preparing an organic phase containing 10 g MMA and 1 g of PDMS-methacryloxypropyl terminated. | | | | | | |

Figure 8 shows the conversion (%) vs. time plots for reactions started using PDMS-RAFT agents in emulsion polymerization for PDMS-b-PMMA and PMMA-g-PDMS.

PDMS-RAFT reactions and the graft polymerization are characterized by rapid reaction rates, suggesting the role of PDMS-RAFT and PDMS as a stabilizer is highly influential in preventing partitioning of the RAFT agent into the water phase. This will be confirmed by Size Exclusion Chromatography.

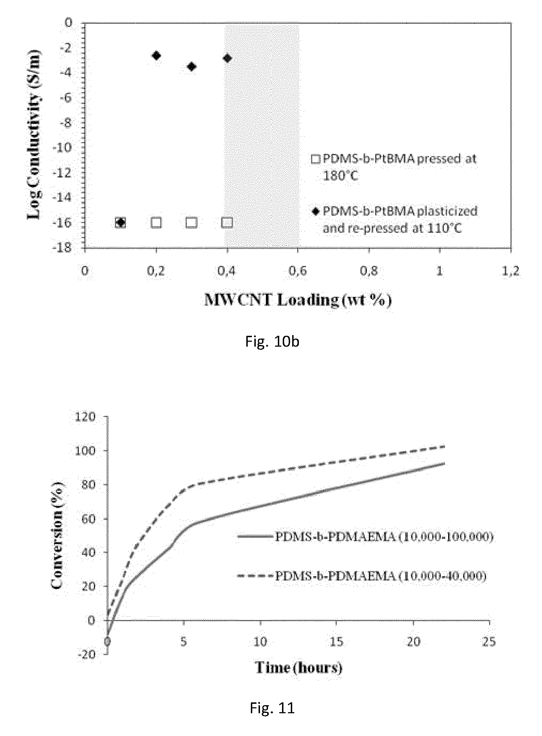

PMMA-b-PDMS-b-PMMA corresponding to example 4 from table 1 is a tri-block copolymer that could be described as compatible/compatible, however in this system the higher degree of CNT compatibility of the PDMS block makes this block the preferred phase. PMMA-g-PDMS showed a 0.2 wt% percolation threshold (Figure 10a). It was expected to show good CNT compatibility as the rearrangement of this molecule would be different (more defined phases are expected). PDMS-b-PtBMA showed no conductivity below 0.5 wt% CNT (Figure 10a) unless the fore-mentioned steam treatment was used on it (Figure 10b).

In addition to emulsion polymerization, novel aqueous dispersed polymerizations using PDMS-RAFT were carried out for water soluble monomers such as PDMAEMA, poly(N-isopropylacrylamide) (PNIPAM), poly(methacrylamide) (PMAM) and poly(sodium styrene sulfonate (PNaSS). The synthesized block copolymer composition is summarised in table 2.

Polymerizations were successful in all these cases, though the viability of the resulting polymers differs. PDMS-PMAM and PDMS-PNIPAM produce highly water compatible polymers. In the case of PMAM the result is a dense physical hydrogel and in the case of PNIPAM a dense core of polymeric gel surrounded by viscous polymer solution is obtained.

In the case of PDMAEMA, the polymerizations were carried out successfully and produced viscous polymer dispersions at 10-23 wt%. These could be used directly as an aqueous dispersed coating.

**Table 2**

| | **A-block = PDMS B-Block** | **Approx. block lengths in A-B and B-A-B block copolymers in Daltons** | **Solids Content (%)** |
|---|---|---|---|
| 7 | PDMAEMA | 10,000-100,000 | 20 |
| 8 | PDMAEMA | 10,000-40,000 | 22 |
| 9 | PDMAEMA | 10,000-20,000 | 17 |
| 10 | PDMAEMA | 50,000-25,000-50,000 | 21 |
| 11 | PDMAEMA | 100,000-25,000-100,000 | 20 |
| 12 | PNaSS | 10,000-100,000 | 20 |
| 13 | PMAM | 10,000-100,000 | 20 |
| 14 | PNIPAM | 10,000-100,000 | 18 |

The plot of conversion vs. time for examples 7 and 8 are shown in figure 11. The aqueous dispersed polymerizations are slower due to the lower compatibility between PDMS and the PDMAEMA monomer and the reduced activity of PDMAEMA for the CVADTB RAFT agent.

When PDMS-PNaSS is synthesized over an aqueous dispersed route, it removes the requirement of an emulsifier as the NaSS monomer is a poor but sufficiently strong surfactant: at the high monomer to initiator ratio (20 wt% surfactant) it is sufficient to disperse PDMS-RAFT.

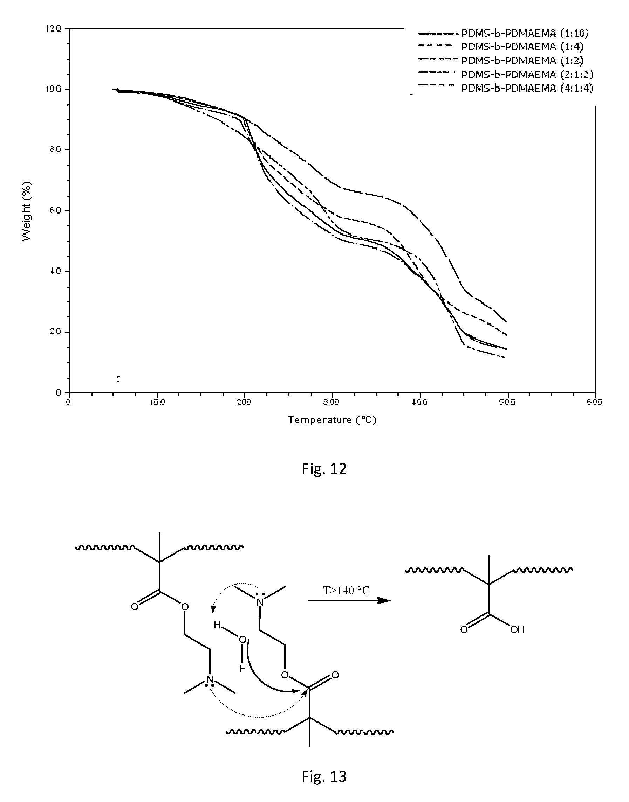

Although SEC (size-exclusion chromatography) has been difficult to perform on these materials, using the fact the PDMAEMA decomposes in a manner similar to P*t*BMA we can get information on the composition from TGA. The results of TGA experiments can be found in Figure 12 and in the table 3.

**Table 3**

| | **PDMS-PDMAEMA block lengths** | **Theoretical wt% of PDMAEMA per Chain** | **Theoretical wt% of Side Groups** | **Actual wt% loss of side groups** |
|---|---|---|---|---|
| **7** | 10,000-100,000 | 90.9 | 41.7 | 40.8 |
| **8** | 10,000-40,000 | 80.0 | 36.7 | 35.6 |
| **9** | 10,000-20,000 | 66.6 | 30.6 | 26.7 |
| **10** | 50,000-25,000-50,000 | 80.0 | 36.7 | 42.2 |
| **11** | 100,000-25,000-100,000 | 88.9 | 40.8 | 41.8 |

In the case of PDMAEMA, it is likely that any water residue in combination with the Lewis Base of the DMAEMA side group causes hydrolysis similar to what is known for polyesters at T>140 °C, yielding methacrylic acid units (see Figure 13). Thus PDMAEMA blocks can also be turned more CNT-incompatible by hydrolysis through the above-mentioned steam treatment.

CNT's can be dispersed into these materials using CNT in SDS dispersions (by the same latex approach). The material can be recovered in a variety of ways. The viscous dispersion can be drop-cast onto Teflon sheets to form thin conductive films, onto glass slides or other solid substrates to form conductive coatings, or freeze dried for compression molding to obtain conductive nanocomposites.

Samples were recovered as thin films after drop-casting onto Teflon sheets. Their thermal properties were investigated using differential scanning calorimetry and compared to the bulk copolymer.

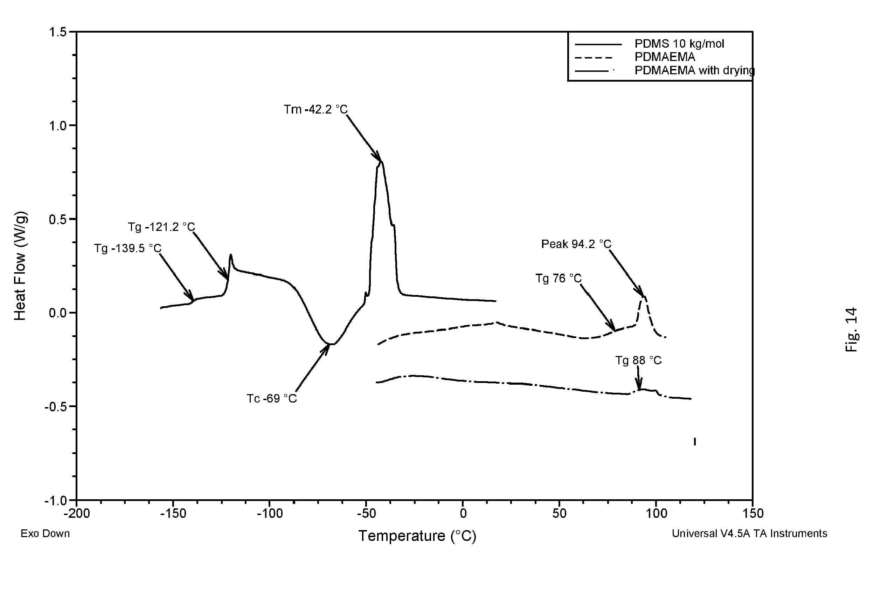

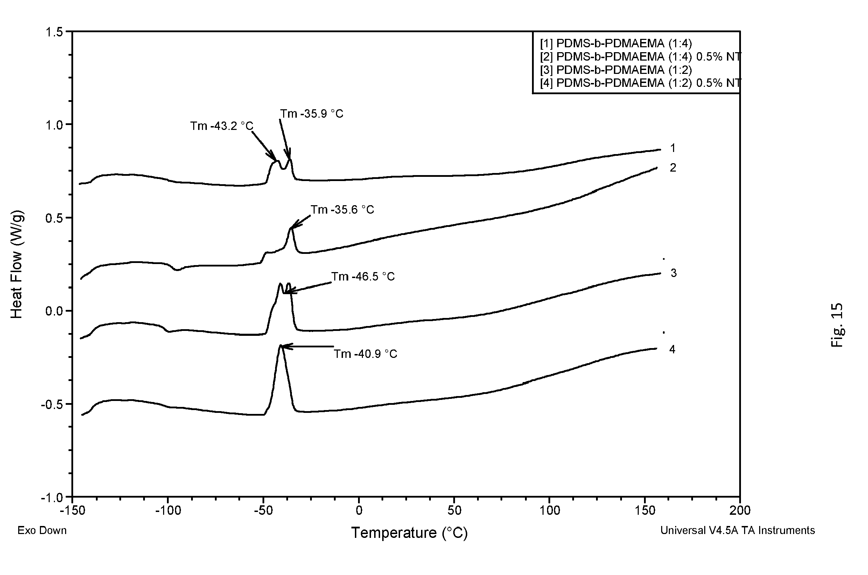

Figure 14 shows the DSC results for PDMS and PDMAEMA homopolymers and figure 15 shows the result of DSC carried out on the nanocomposite materials. For PDMS, a clear Tg is seen at - 121.2 °C, along with cold-crystallization at -69 °C, and melting at -42.2 °C. For PDMAEMA (un-dried), there is a Tg at 76 °C, followed by an endothermic peak caused by water plasticizing the material at 94.2 °C. In the dried sample both the Tg and any additional peaks are much more difficult to observe.

There is a clear difference in the melt and crystallization behavior of the PDMS block when CNT's are added, which is a clear indication the CNT's are found in the PDMS phase. The thermal behavior of the PDMAEMA phase of the block copolymer is less clear, however, plasticizing of the PDMAEMA as well as decomposition of the PDMAEMA blocks may reduce its visibility in this temperature range. The DSC traces shown are taken from a second heating run.

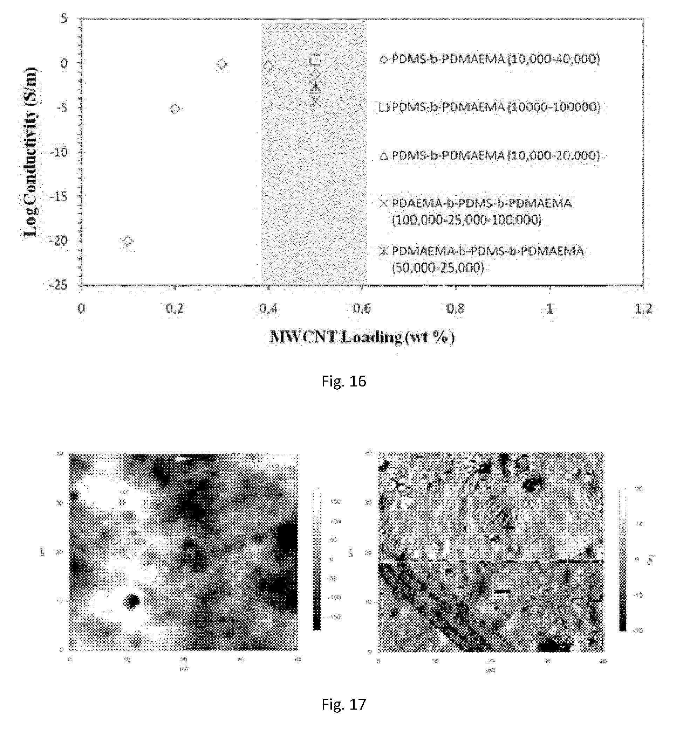

With PDMS-PDMAEMA samples coated on glass slides, the conductivity over these thin coatings was measured. The results are shown in the table 4 and a percolation plot is shown in Figure 16. A percolation threshold of 0.2 wt% is observed, indicating double percolation.

**Table 4**

| Sample | Wt% CNT | Thickness (mm) | Sheet Resistivity (Ωm) | Conductivity (S/m) | Log C |
|---|---|---|---|---|---|
| **7** | 0.5 | 0.09 | 2.87 | 0.349 | 0.355 |
| **8** | 0.5 | 0.1 | 16.3 | 0.0612 | -1.21 |
| **8** | 0.4 | 0.1 | 2.29 | 0.436 | -0.36 |
| **8** | 0.3 | 0.14 | 1.30 | 0.772 | -0.113 |
| **8** | 0.2 | 0.165 | 132000 | 7.57 10⁻⁶ | -5.12 |
| | | | (1000 V) | | |
| **8** | 0.1 | 0.185 | - | - | - |
| **9** | 0.5 | 0.075 | 621 | 0.00161 | -2.79 |
| **10** | 0.5 | 0.055 | 348 | 0.00287 | -2.54 |
| **11** | 0.5 | 0.075 | 18600 | 5.39 10⁻⁵ | -4.27 |
| | | | (1000 V) | | |

PDMS-PDMAEMA has shown an affinity for a number of substrates for use as a coating such as glass, nylon 6, aluminium and it does not spontaneously de-wet from Teflon. PDMS-PNaSS copolymers de-wet from aluminium, nylon, glass and Teflon, making it unsuitable for use as coating on these substrates. PDMS-PNaSS copolymers do adhere well to steel, making coating applications on similar metal surfaces possible. PDMS-PNaSS copolymer of example 12, although difficult to form coatings or drop-cast films, does form reasonable films upon film pressing using water or steam as a plasticizer. The Na⁺ ions make PNaSS samples semiconductive when plasticized, even without CNT's present: due to additional ionic conductivity Log C (S/m) equals -3.57 (indicating semi-conductivity) compared to a -0.57 (indicating conductivity) with 0.5 wt% CNT's present (both recorded without colloidal paste).

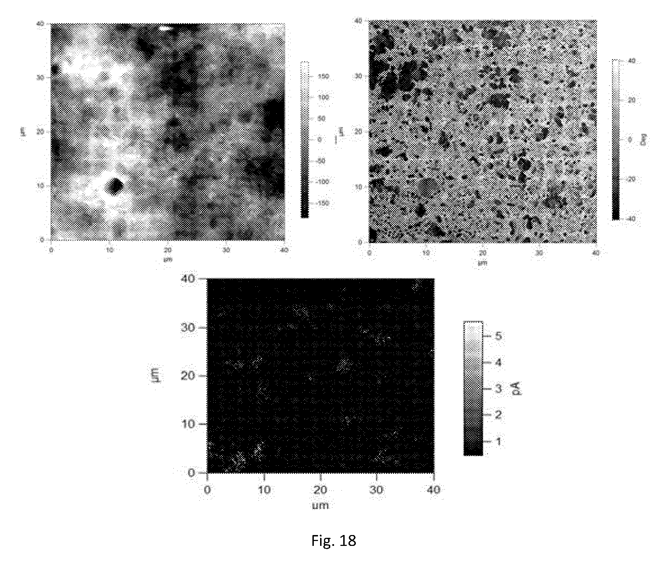

The composition and conductivity of the PDMS-b-PDMAEMA coatings was investigated by atomic force microscopy (AFM) and conductive AFM (ORCA). The following figures show the height and phase traces for the PDMS-b-PDMAEMA of example 7 coating on glass (without CNT's present, Figure 17) and the height and phase traces, as well as the conductive AFM trace of example 7 with 0.5 wt% CNT's present. In Figure 17, the drop-cast films have a surface variation of -60 to 60 nm (quite smooth) with a shift in phase angle of between -20 and 20 degrees, indicating different phases are present. For the CNT containing example 7, (Figure 18) we see more variation in the height trace and an increase in the shift in phase angle. The contrast between bright (conductive) and dark (non-conductive) areas in the conductive AFM measurements indicates conductive phases are present, pointing at double percolation.

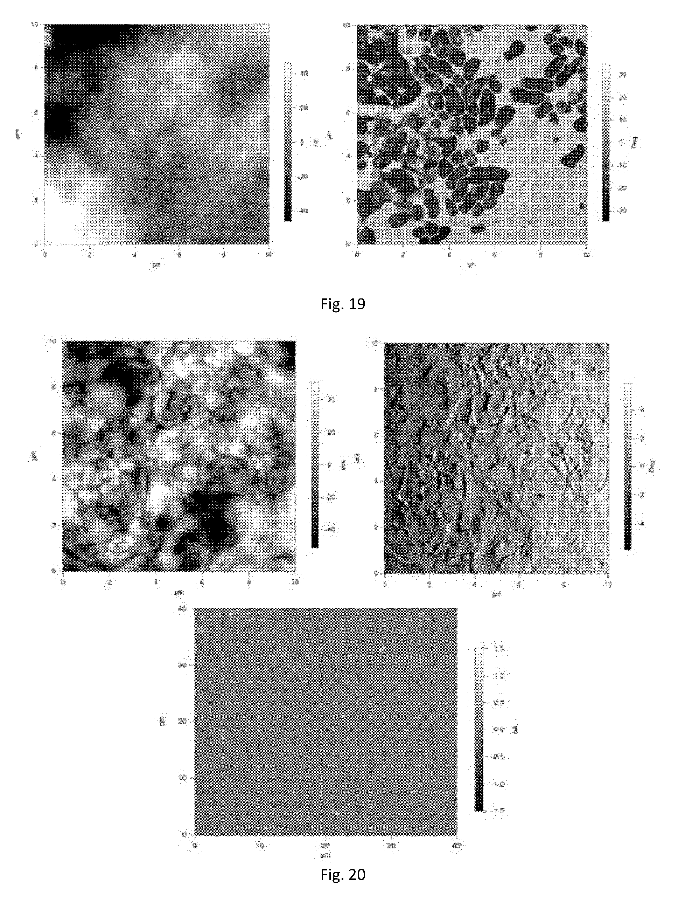

By contrast when the PDMAEMA block length is shorter in example 8, there is a visible difference in the height and phase trace between example 8 without CNT's (Figure 19) and example 8 (Figure 20) with CNT's, as well as a noticeable difference in the conductive AFM images. In the sample without CNT the height variation across the sample is between -40 and 40 nm, and clear phases are visible in the phase angle trace. When the CNT's are added to the material, the reduction in the volume fraction of the matrix (major incompatible block) for 8 compared to the CNT compatible block (the minor phase) leads to a greater spread of conductivity across the entire sample and a current of a factor 103 greater than for example 7.

It was also discovered that the surfactant properties of the block copolymers of the invention renders those materials suitable to at least partially replace SDS for the exfoliation of CNT's. This was demonstrated for PDMS-b-PDMAEMA of example 7 and 8 and PDMS-b-PNaSS of example 12. This is advantageous because it may reduce SDS loadings in the final materials (SDS may reduce the thermal stability of the final nanocomposite) and increase the compatibility with other polymer systems.

CNT's were dispersed in PDMS-b-(hydrophilic block) copolymers using a variation of the methodology developed by Cor E. Koning in "Chemistry of Materials", 2007, 19(15), 3787, wherein CNT's are prepared as a wt% in SDS solution and mixed by sonication using an Ultrasound mixer until exfoliated. Exfoliation is monitored by an increase to a maximum in the UV absorbance (Abs Max) of dilute solutions measured with UV-vis spectroscopy.

CNT's are essentially one-dimensional particles that have a length that corresponds to a wavelength in the UV, therefore these waves are absorbed by the CNT solution. By plotting the Abs Max at different energies (where energy = power x time), at a constant output of 20 W from the ultrasound mixer, we can determine when exfoliation occurs.

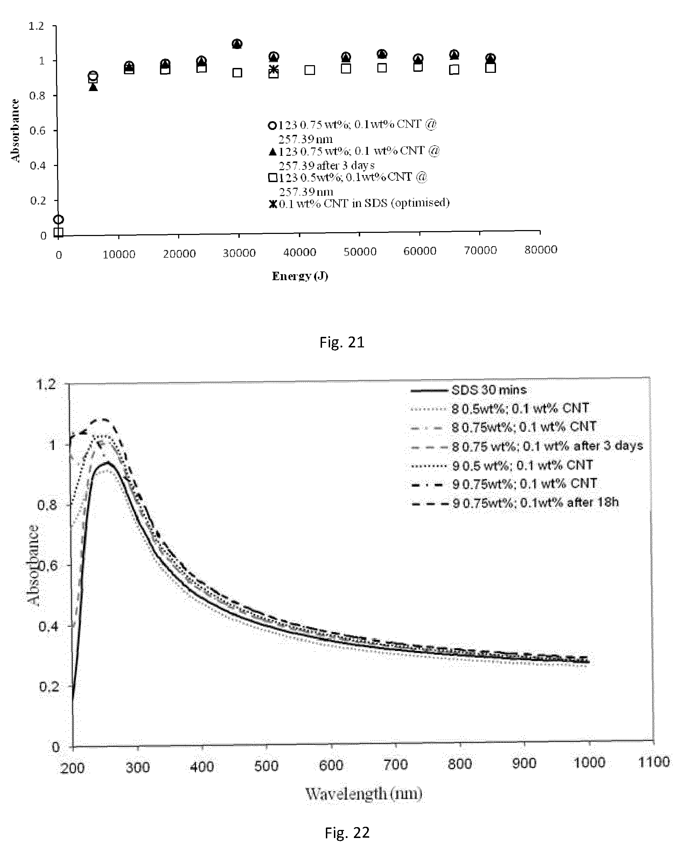

The MWCNT's used in these experiments have an absorbance maximum at 257.36 nm. Using 0.1 wt% CNT's exfoliated in SDS as a reference for dilution and CNT length, 0.1 wt% of CNT was exfoliated into solutions containing 0.25 wt%, 0.5 wt% and 0.75 wt% PDMS-b-PDMAEMA of example 8 (Figure 21).
In the case of 0.25 wt% PDMS-b-PDMAEMA of example 8 there was an insufficient amount of surfactant to reach exfoliation. With 0.5 wt% and 0.75 wt% PDMS-b-PDMAEMA of example 8, exfoliation was reached at an input energy around 15000 J, which is considerably lower than for SDS (35000 J). Using high energies in ultrasound mixing may damage CNT's.

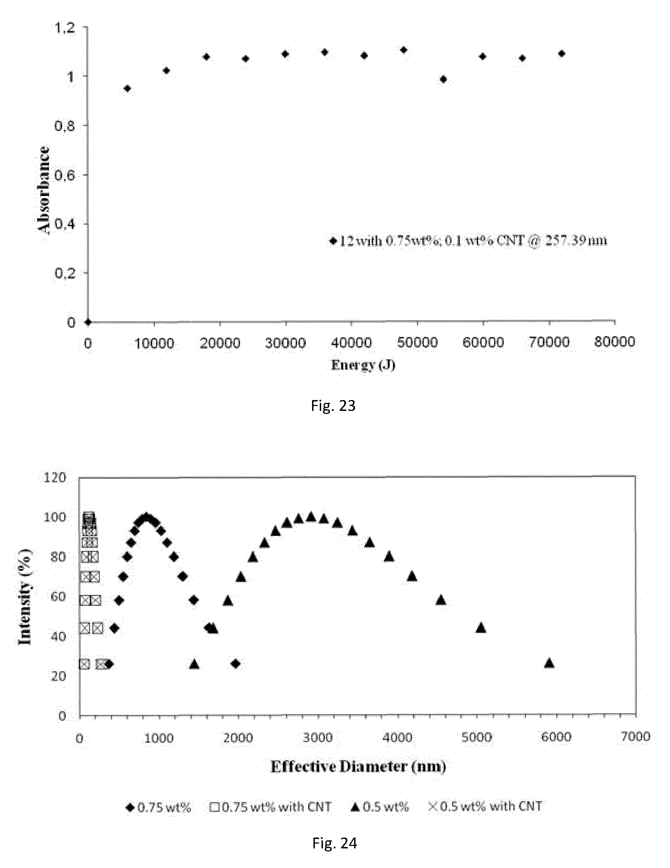

0.5 wt% of polymer PDMS-b-PDMAEMA relative to 0.1 wt% of CNT's is the minimum required to achieve exfoliation. In the case where 0.75 wt% of polymer was used relative to 0.1 wt% of CNT's, the actual absorbance maxima from UV-vis was out-of-scale. This was caused by large polymer micelles absorbing light at a lower wavelength than the CNT's. If the solution was allowed to rest for 24 hours, more equilibration is reached, and a single maximum was observed closer to 257.4 nm, as seen in figure 22. Polymer PDMS-b-PDMAEMA 9 showed the same behavior as sample 12 (PDMS-b-PNaSS), as seen in figure 23.

Using dynamic light scattering, the difference in particle diameter with and without CNT's was measured at the same dilution as shown in figure 24. The polymer solutions without CNT's contained a wide range of diameter sizes, some of which exceeding the measureable range.

When CNT's are added, the polymer particles re-arrange leading to an overall reduction in the particle diameter, indicating good interaction with the CNT's.

The CNT exfoliated solutions themselves have interesting properties. The 0.5 wt% and 0.75 wt% solutions can be drop cast onto glass or Teflon to produce very conductive thin films (the dry polymers contain about 20 wt% CNT's). The surface resistance of these samples has been measured to be as low as 60 Ohms/cm for films drop-cast on glass. These samples can be diluted further to reduce the thickness of the polymer composite layer and a surface resistivity of only 500 kOhms/cm was measured across a sample that was almost completely optically transparent in the visible spectrum, opening the usage of these materials for application as transparent conducting plastic electrodes that, e.g., may find application in solar cells.

Another property of these CNT exfoliated solutions is that they can be used as a conductive ink, suitable for writing on paper and glass. The resistance depends on the path length and width, but for a straight line 1 cm long and 0.5-1 mm wide drawn on paper, the resistance of a nanocomposite based on PDMS-b-PDMAEMA of example 8 is 4.8 MOhms, for example 9 the resistance is 13.5 MOhms, and for PDMS-b-PNaSS of example 12 the resistance was 50 KOhms. The high conductivity (low resistance) of the latter may be due to ionic conductivity in PNaSS inks. CNT's in SDS do not behave in the same way, probably due to a lower capillary viscosity (observed in glass capillaries), and SDS-covered CNT's are more able to permeate through the paper.

An effect observed only in PDMS block copolymers is that after film processing, the conductivity of the PDMS samples can be modified by subjecting the samples to high voltages. CNT alignment in electric fields is well known in melt or monomer pre-curing liquids. It was discovered that applying a sufficiently high voltage results in an improved conductivity, probably due to the alignment of CNT's present in the PDMS phase. As PDMS blocks are immiscible with the other blocks and are always in the molten state at ambient temperature, the PDMS allows for some CNT mobility in the solid films. Applying a high bias voltage of 100 V to 1000 V results in an improvement in conductivity measured at the standard 6 V bias that can last (at least) several days. This effect is only observable in block copolymers where the CNT's are in the mobile phase.

### Exfoliation of CNT's into block copolymer dispersions used as synthesized (direct dispersion)

It seems likely that SDS can be replaced by these block polymer systems for dispersing CNT's, which should increase compatibility with a number of other polymers for usage as nanocomposites. As it was possible to disperse CNT's into dilute solutions of these block copolymers, it was tried to disperse CNT's directly into samples of the bulk block copolymer dispersions as obtained after RAFT dispersion polymerisation in water.

Since these bulk block copolymer dispersions would require dilution of >1000x in order to make the results analyzable by UV-vis, drop-casting 500 µl of solution onto a glass plate and measuring the resistance of the dried samples was used to check both exfoliation and percolation of CNT's. Mixtures of 0.3 wt% CNT in 10 g of PDMS-PDMAEMA dispersion were prepared.

The dispersions were treated using mixing by ultrasound. Samples were taken every 5 mins for 30 minutes. After 8 mins of ultrasonic mixing, the pitch of the sound given off changes, indicating a change in the speed of sound travelling through the medium, and a change in density/viscosity. When the bulk block copolymer dispersion and the block copolymer composite dispersion (containing CNT materials), it can be clearly observed that the viscosity of the CNT containing material is less than for the original bulk dispersion. If the dispersions are left to stand they do not thicken. This rheological effect is the opposite of what is reported for PDMS and PDMS-PS blends combined with CNT's.

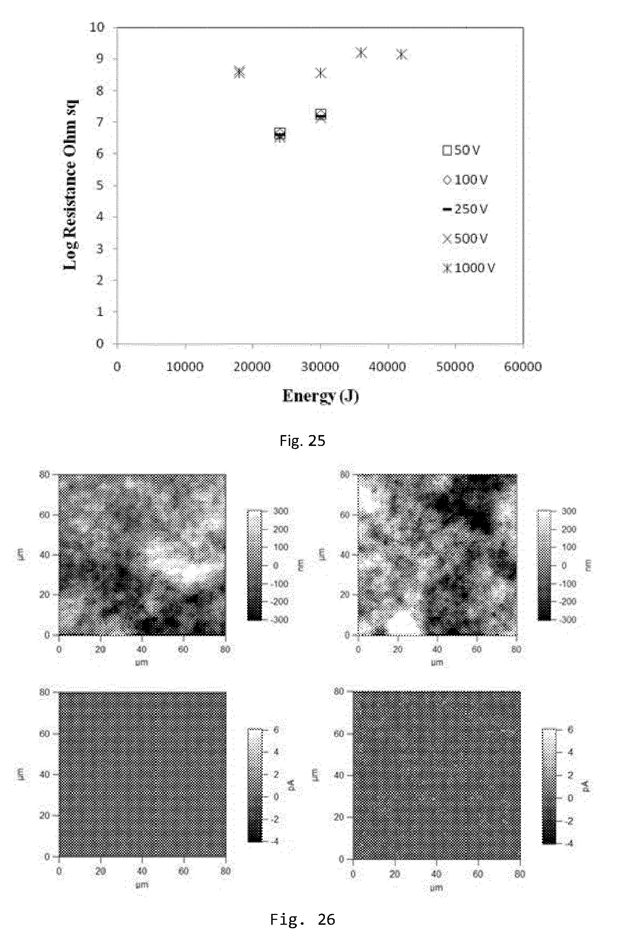

For the direct dispersions, Log Sheet Resistivity was measured vs. energy and different voltages. Conductivity was seen across the widest voltage range after 20 mins for PDMS-b-PDMAEMA sample 8 as seen in Figure 25. For films of the same dispersion treated for lower or higher mixing times (energies), no conductivity at a 50-250 V bias.

Films obtained by drop-casting the direct dispersion (after 20 mins of mixing by ultrasound) onto glass slides were studied by AFM and conductive AFM. For PDMS-b-PDMAEMA of example 7, it is possible to observe two different phases using optical microscopy, with circular phases of ~300 µm within a larger matrix (Figure 25). The height and phase traces of these two phases are similar, however the ORCA measurements show that within the spherical domains the conductivity is lower and evenly distributed over the area, whereas in the area outside of the circular phases there are many domains with higher conductivity (white areas). This result suggests that although samples taken at 20 and 25 minutes show lower resistances, the CNT's are not yet completely exfoliated. The clusters in the matrix may indicate zones where CNT's are still aggregated resulting in zones with permitting a higher conductive density.

PNIPAM (poly(N-isopropyl acrylamide) CNT composites exhibit also some original properties. PNIPAM is a thermally responsive polymer that undergoes a phase transition from hydrophilic to hydrophobic (cloud point) in water above 31°C, this leads to a change in the hydrodynamic radius of the polymer in solution and eventual precipitation, in cross-linked PNIPAM hydrogels it leads to volume collapse.

NIPAM, although a solid, is soluble in water and can be used in the emulsion systems with the PDMS initiator. At reaction temperature (80 °C) the resulting PNIPAM is hydrophobic and remains in the form of the latex particles. When the reaction mixture cools to room temperature, the PNIPAM becomes miscible and once saturation of the aqueous phase is reached it can start to gel. Further dilution in water and cooling of the polymer or using lower concentration of the polymer in the starting reaction can reduce this effect.

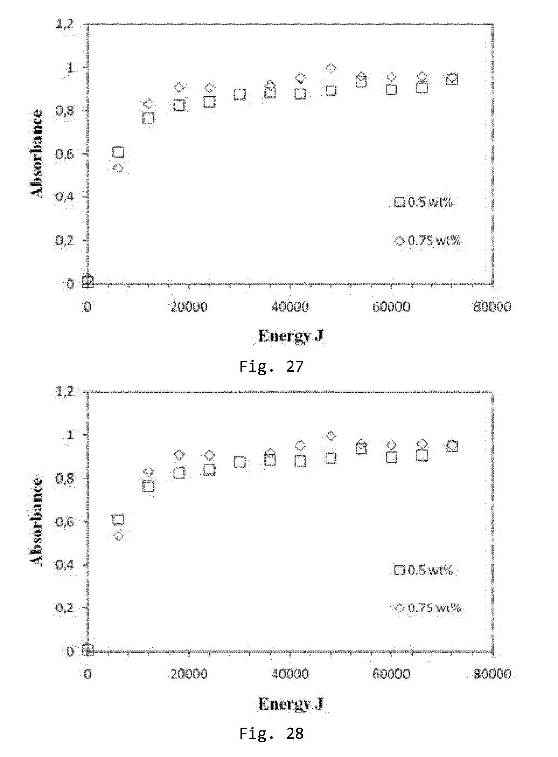

Like other PDMS-b-hydrophilic block copolymers PDMS-b-PNIPAM can be used for exfoliation and direct dispersion (figure 27 and 28) of CNT's. The introduction of CNT's changes the thermal behavior of the PDMS-b-PNIPAM. In the exfoliation experiments the 0.5 wt% polymer; 0.1 wt% MWCNT's solution was thermally stable for up to 3 weeks at 80 °C. The 0.75 wt% polymer; 0.1 wt% MWCNT's solution underwent irreversible collapse between 7 and 14 days at 80°

PDMS-b-PNIPAM bulk solution (10 wt%) undergoes a rapid phase change when samples were stored at 80°C: in less than 5 minutes the sample formed a cloudy physical hydrogel. After 12 hours the sample collapsed into a hydrophobic residue that redissolved upon cooling. Samples containing MWCNT's were much more stable, the CNT's still being dispersed after 80 hours at 80°C. This is due to stronger interaction between PNIPAM and CNT's as the PNIPAM becomes hydrophobic making volume collapse more difficult. However, if stored at 80 °C for > 4 days the nancomposite irreversibly phase separates from the solution into a solid rod or disc. The water/unreacted monomer can then be decanted off and the resulting polymer composite compression moulded into a thin film. These samples have good conductivities around 1 S/m. The polymer pellets prior to compression molding also show some conductivity with values of ~ 30 mS/m.

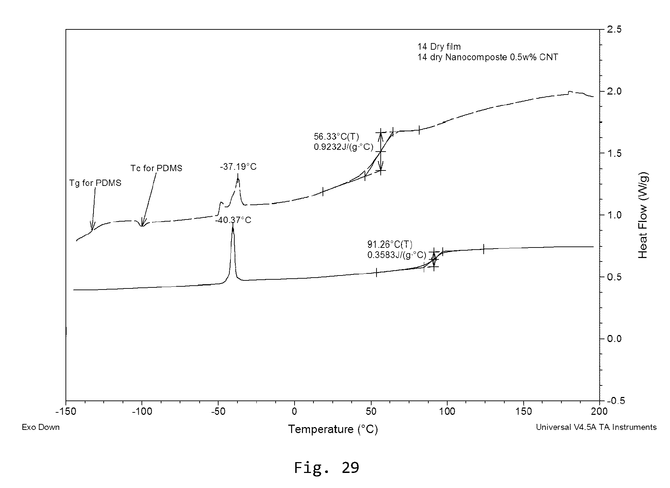

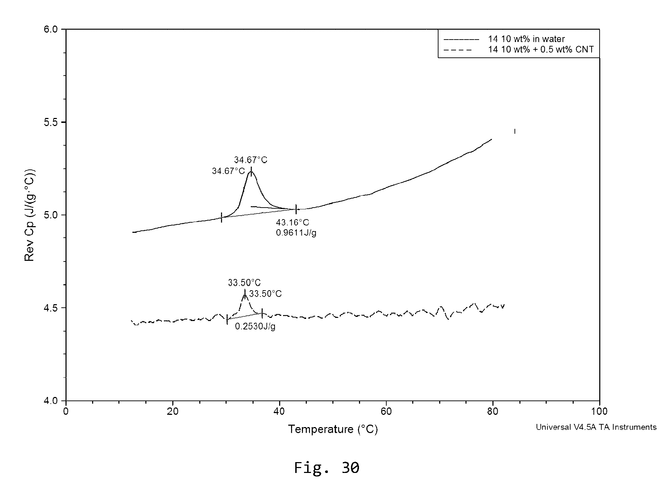

The thermal analysis of the PDMS-b-PNIPAM samples are interesting and show effects in both blocks when CNT's are present (figure 29 and 30), the DSC results were taken from the second heating in both cases. The incorporation of CNT's into the PDMS block changes the melt behavior (a doublet appears), and the Tg and crystallization are also more pronounced. The effect of CNT's on the dried PDMS-b-PNIPAM layer is a lowering of the glass transition temperature of the PNIPAM phase. The improved thermal stability of the solutions (dispersions?) can be seen in the modulated temperature DSC results by the significant reduction in the intensity of the cloud point peak.

It was disclosed in the present invention that conductive materials can be obtained through the Double Percolation concept for block copolymers prepared by emulsion and dispersion polymerization, where the minor block is CNT compatible and the major block is CNT incompatible. For block copolymers having different constituents, percolation thresholds as low as 0.1-0.2 wt% for multi-walled CNT's were noted.

Compatible/incompatible block copolymers could be attained by the in situ transformation of a compatible/compatible block copolymer, changing apolar to polar functionalities. In this procedure, the use of water as a processing aid and/or reaction medium, replacing organic solvents and/or organic plasticizers, is clearly advantageous. The approach also reduces the number of processing steps. For latexes containing PtBMA, a further hydrolysis and plasticizing step after/during compression molding permits the CNT's the mobility needed to travel into the compatible phase, obtaining double percolation and conductivity.

It was also disclosed that PDMS-RAFT agents can be used in emulsion and aqueous dispersed systems to produce block copolymers suitable for double percolation. Block copolymers consisting of PDMS-b-hydrophilic chains can be used to produce conductive CNT composite coatings, and as exfoliating surfactants for CNT systems, which may have a wide variety of applications. It proved feasible to disperse CNT's into the block copolymers.

The block copolymer - CNT nanocomposites and dispersions prepared in this work could find broad application, such as:
- conductive inks, possibly permitting directional conductivity by morphology control;
- transparent plastic electrodes, e.g., for solar cells;
- conductive films, coatings, sheets, e.g., for electromagnetic shielding;
- applications in actuators;

Graphene could be used for replacing the CNT's.

Application of dispersions to surfaces can be done by, e.g., drop casting, bar coating, spin coating, spray painting, or painting.
The block copolymers and their dispersions could be used, e.g.:
- as dispersing agents for CNT's, graphene, metallic nanowires, organic and inorganic or hybrid nanoparticles, e.g. for the incorporation of these nanofillers in thermosets, thermoplastics or self-healing polymers, permitting the improvement of the properties of these materials
- as compatibilizers for polymer blends
- for coatings permitting thermally induced patterning

## Claims

1. Nanocomposite comprising carbon nanoparticles and a heterophasic block copolymer, said block copolymer comprising at least one segment of a polymer A and at least one segment of polymer B, forming a continuous polymer A phase and a polymer B phase, said nanocomposite being **characterised in that** the polymer A phase has a higher affinity for carbon nanoparticles than the polymer phase B, so that carbon nanoparticles concentration is higher in the polymer A phase than in the polymer B phase, the percolation threshold of carbon nanoparticles being reached in polymer A phase.

2. Nanocomposite according to claim 1 wherein the carbon nanoparticles are carbon nanotubes.

3. Nanocomposite according to claim 1 or 2, wherein the polymer A is a siloxane based polymer, more preferably PDMS.

4. Nanocomposite according to any of the previous claims wherein the polymer B comprises segments of polymer selected from the group consisting of acrylate polymer, acrylic acid polymer, ionomer and polyelectrolyte, preferably from the group consisting of PMMA (polymethyl methacrylate), PMA (polymethacrylic acid), PDMAEMA (poly(dimethyaminoethyl methacrylate)), PNIPAM (poly(N-isopropylacrylamide)), PMAM (polymethacrylamide) and PNaSS (poly sodium styrene sulfonate).

5. Nanocomposite according to any of the previous claims wherein the block copolymer is a diblock (AB) or a triblock of structure BAB or has a B type backbone with A type grafted side chains.

6. Nanocomposite according to any of the previous claims wherein the ratio between the molecular weight of A segment on the B segment(s) is preferably less than 0.2, advantageously about 0.1.

7. Nanocomposite according to any of the previous claims wherein the carbon nanoparticles concentration in wt% of the total nanocomposite is less than 0.5% wt, preferably less than 0.25%, more preferably between 0.2 wt% and 0.1 wt%.

8. Aqueous dispersion of the nanocomposite according to any of the previous claims.

9. Process for the production of an aqueous nanocomposite dispersion according to claim 8 comprising the steps of:
- providing an emulsion comprising water, a surfactant, a segment of polymer A or B or a segment of a precursor of polymer A or B;
- add a second monomer of polymer B or A, or a monomer of a polymer precursor of polymer B or A to produce a copolymer latex;
- add an exfoliated suspension of carbon nanotubes to the copolymer latex to obtain the nanocomposite dispersion.

10. Process according claim 9 wherein the step of providing an emulsion comprising water, a surfactant, a segment of polymer A or B or a segment of a precursor of polymer A or B further comprises the steps of :
- providing an emulsion/dispersion comprising water, a surfactant, a first monomer of polymer A or B, or a monomer of a polymer precursor of polymer A or B, and a polymerisation catalyst;
- let the polymerisation of the first polymer or polymer precursor occur up to a conversion of about 80% to produce an homopolymer latex.

11. Process according to claims 9 or 10 wherein said segment of polymer A or B or said segment of precursor of polymer A or B have RAFT initiator end groups.

12. Process for the production of a dried nanocomposite using the process according to any of the claims 9 to 11 further comprising the step of drying the nanocomposite dispersion.

13. Process according to claim 12 wherein a precursor of segment polymer B having high affinity towards carbon nanotubes is used and wherein said precursor is selectively modified to obtain a polar segment polymer B, preferably by thermolysis of a labile group.

14. Process according to claim 13 comprising a thermal treatment in order to let the carbon nanotubes reorganise.

15. Process according to claim 14 wherein the thermal treatment is performed in the presence of a polar solvent, preferably water vapour, in order to plasticise the polar phase.
